# EUROPÄISCHE PATENTANMELDUNG

(11) **EP 1 168 554 A1**
(43) Veröffentlichungstag der Anmeldung: **02.01.2002**
(21) Anmeldenummer: 01113780.9
(22) Anmeldetag: 06.06.2001
(51) Int. Cl.: H02G 3/04

(54) **Leitungsführungskanal**

(30) Priorität: 27.06.2000 DE 20011278 U
(71) Anmelder: Tehalit GmbH & Co. KG, D-67716 Heltersberg (DE)
(72) Erfinder: Malschowsky, Ralf, 67716 Heltersberg (DE); Schneckmann, Horst, 67705 Trippstadt (DE); Vatter, Norbert, 66851 Horbach (DE); Entenmann, Walter, 67714 Waldfischbach-Burgalben (DE)
(74) Vertreter: Patentanwälte Möll und Bitterich

(57) **Zusammenfassung**

Ein aus einem thermoplastischen Kunststoff extrudierter Leitungsführungskanal besitzt ein Unterteil (10) mit einem Boden (11), zwei Seitenwänden (12), Deckelhalteprofilen (13) an den Seitenwänden (12) und gegebenenfalls Trennwände und Halteleisten (14, 15) an der Innenseite des Bodens (11). Zur Beeinflussung der mechanischen und/oder sonstigen Eigenschaften des Kanals (10), z. B. zur Erhöhung der Stabilität, der Wärmebeständigkeit, der Schlagzähigkeit usw., befindet sich im Boden (11), in den Seitenwänden (12) in den Deckelhalteprofilen (13) und/oder in den Halteleisten (14, 15) wenigstens eine coextrudierte Kernschicht (1) aus einem beispielsweise Verstärkungsfasem enthaltenden Werkstoff.

## Beschreibung

Die Erfindung betrifft Leitungsführungskanäle gemäß dem Oberbegriff des Anspruchs 1.

Leitungsführungskanäle aus Kunststoff sind seit Jahrzehnten bekannt und weltweit in Gebrauch. Sie bestehen üblicherweise aus einem meist trogförmigen Unterteil und wenigstens einem lösbar aufrastbaren Deckel. Hergestellt werden Kunststoff-Leitungsführungskanäle überwiegend im Extrusionsverfahren.

Es versteht sich, dass die verschiedenen Bereiche eines Leitungsführungskanals, insbesondere des Unterteils, welches die elektrischen Leitungen und/oder Installationsgeräte aufnimmt, unterschiedlichen mechanischen Belastungen ausgesetzt sind. Um diese Belastungen aufzufangen, werden die Wandstärken in den hoch belasteten Bereichen höher gewählt als in den niedrig belasteten Bereichen. Dies führt zu höheren Materialkosten und höheren Gewichten. Außerdem ist das Abkühlungsverhalten des Kunststoffs in den unterschiedlich dicken Wandbereichen unterschiedlich, so dass es leicht zu unerwünschten Gefüge- und Oberflächenveränderungen kommt. Das ist unbefriedigend.

Der vorliegenden Erfindung liegt daher die Aufgabe zugrunde, Leitungsführungskanäle anzugeben, deren Eigenschaften bereichsweise verändert werden können, ohne die Wandstärken zu verändern.

Diese Aufgabe wird gelöst durch Leitungsführungskanäle mit den Merkmalen des Anspruchs 1.

Die vorliegende Erfindung verwendet zur Veränderung der Kanaleigenschaften koextrudierte Kemschichten. Die jeweiligen Eigenschaften der Kemschichten sind für die mechanischen und sonstigen Eigenschaften des Kanals in dem betroffenen Bereich verantwortlich; die Außenansicht des Kanals dagegen bleibt gegenüber den bisherigen Kanälen völlig unverändert, wenn man von einer gegebenenfalls reduzierten Wandstärke absieht.

Verfahren und Vorrichtungen für die Koextrusion von Kunststoffen sind bekannt. Man vergleiche DE 197 44 515 A oder DE-Zeitschrift "Kunststoffe" 86 (1996) 1, S. 54/55. Die letztgenannte Schrift beschreibt die Herstellung von Kunststoffrohren, deren Wand aus drei Schichten besteht. Leitungsführungskanäle sind jedoch keine geschlossenen Rohre, sondern besitzen einen U-förmigen Querschnitt, der absolut formhaltig sein und bleiben muss.

Gemäß einer ersten Ausgestaltung der Erfindung besteht die Kemschicht aus Kunststoff und enthält vorzugsweise Verstärkungsfasem, z. B. aus Textil, Glas oder Kohlenstoff. Da die Fasern auf die von außen nicht sichtbare Kernschicht beschränkt bleiben, bleiben die sichtbaren Oberflächen des Leitungsführungskanals völlig unverändert. Insbesondere tritt die unschöne, durch die Verstärkungsfasern bedingte rauhe Oberfläche nicht in Erscheinung.

Gemäß einer anderen Ausgestaltung der Erfindung ist die Kernschicht elektrisch leitend. Elektrisch leitende Schichten können als Leitungs-, Erdungs- oder Abschirmschicht eingesetzt werden.

Vorteilhafterweise besteht die Kernschicht aus einem Werkstoff, der von dem Kunststoff der Außenschichten abweicht. Besteht die Außenschicht beispielsweise aus Polyvinylchlorid (PVC), so kann die Kernschicht aus Acryl-Butadien-Styrol-Copolymerisat (ABS) bestehen. Dadurch erreicht man eine sehr hohe Schlagzähigkeit und eine hohe Wärmeformbeständigkeit. Es empfiehlt sich daher, eine derartige Kunststoffkombination im Bereich der Deckelhalteprofile oder auch im Bereich der Halteleisten vorzusehen.

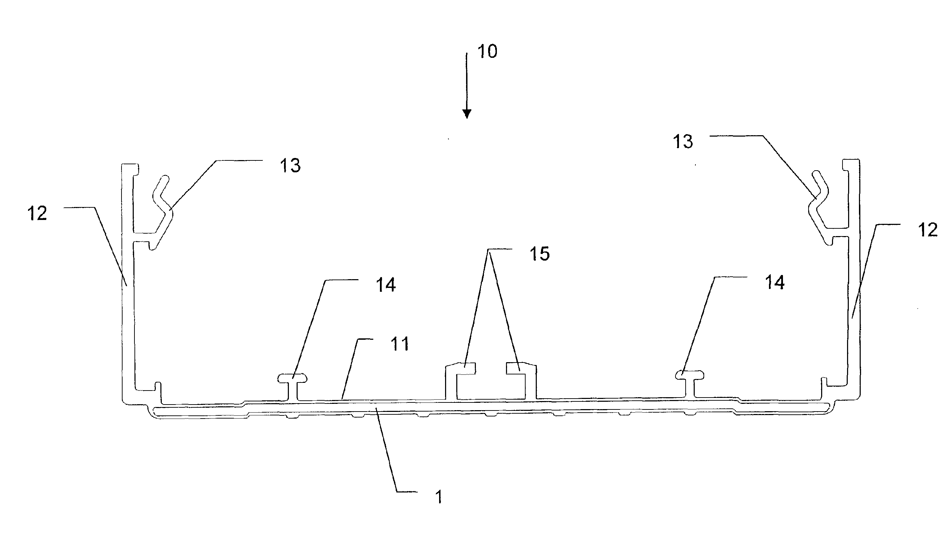

Anhand der Zeichnung soll die Erfindung in Form eines Ausführungsbeispiels erläutert werden.

Die Figur zeigt einen Querschnitt durch ein Unterteil 10 eines Leitungsführungskanals mit rechteckigem Querschnitt. Das Unterteil 10 besteht aus einem Boden 11 und zwei Seitenwänden 12. An den freien Kanten der Seitenwände 12 sind Deckelhalteprofile 13 angeordnet. An der Innenseite des Bodens 11 erkennt man T-förmige Halteleisten 14 und L-förmige Halteleisten 15.

Der Boden 11 besitzt eine koextrudierte Kernschicht 1, die die mechanischen Eigenschaften des Bodens 11 wesentlich bestimmt. Besteht die Kernschicht 1 aus einem fasergefüllten Kunststoff, so werden die mechanischen Eigenschaften des Bodens verbessert und die Wandstärke des Bodens 11 kann wesentlich geringer gewählt werden als bei handelsüblichen Kanälen. Die Außenansicht 1 des Kanals bleibt dabei unverändert.

Besteht die Kemschicht 1 aus einem elektrisch leitenden Kunststoff, so kann sie als Leitungs-, Erdungs- oder Abschirmschicht eingesetzt werden.

Es versteht sich, dass die Kernschicht 1 nicht nur im Bereich des Bodens 11 vorgesehen sein kann, sondern auch im Bereich der Seitenwände 12 und insbesondere im Bereich der Deckelhalteprofile 13, die beim Aufsetzen und Abnehmen des Deckels mechanisch belastet werden.

## Patentansprüche

1. Leitungsführungskanal aus Kunststoff, im wesentlichen umfassend
- ein Unterteil (10) mit
- einem Boden (11),
- zwei Seitenwänden (12),
- Deckelhalteprofilen (13) an den Seitenwänden (12)
- und gegebenenfalls Trennwänden und Halteleisten (14, 15) an der Innenseite des Bodens (11),
- und wenigstens einen Deckel,
**gekennzeichnet durch** das Merkmal:
- im Boden (11) und/oder den Seitenwänden (12) befindet sich wenigstens eine koextrudierte Kernschicht (1) aus einem die mechanischen und/oder sonstigen Eigenschaften des Kanals (10) verändernden Werkstoff.

2. Leitungsführungskanal nach Anspruch 1, **gekennzeichnet durch** das Merkmal:
- die Kernschicht (1) besteht aus Kunststoff.

3. Leitungsführungskanal nach Anspruch 1 oder 2, **gekennzeichnet durch** das Merkmal:
- die Kernschicht (1) enthält Verstärkungsfasem.

4. Leitungsführungskanal nach Anspruch 3, **gekennzeichnet durch** das Merkmal:
- die Verstärkungsfasern bestehen aus Textil, Glas oder Kohlenstoff.

5. Leitungsführungskanal nach einem der Ansprüche 1 bis 4, **gekennzeichnet durch** das Merkmal:
- die Kernschicht (1) ist elektrisch leitend.

6. Leitungsführungskanal nach einem der Ansprüche 1 bis 5, **gekennzeichnet durch** das Merkmal:
- die Kernschicht (1) besteht aus einem abweichenden Werkstoff.

7. Leitungsführungskanal nach Anspruch 6, **gekennzeichnet durch** die Merkmale:
- die Kernschicht (1) besteht aus Acryl-Butadien-Styrol-Copolymerisat (ABS),
- die Außenschichten bestehen aus Polyvinylchlorid (PVC).

8. Leitungsführungskanal nach einem der Ansprüche 1 bis 7, **gekennzeichnet durch** das Merkmal:
- eine koextrudierte Kemschicht befindet sich im Bereich der Deckelhalteprofile (13).

9. Leitungsführungskanal nach einem der Ansprüche 1 bis 8, **gekennzeichnet durch** das Merkmal:
- eine koextrudierte Kernschicht befindet sich im Bereich der Halteleisten (14, 15).
